# EUROPÄISCHE PATENTSCHRIFT

(11) **EP 1 584 389 B1**
(45) Veröffentlichungstag und Bekanntmachung des Hinweises auf die Patenterteilung: **25.06.2008**
(21) Anmeldenummer: 04008296.8
(22) Anmeldetag: 06.04.2004
(51) Int. Cl.: B23B 31/30, B23B 31/20, B23B 31/40

(54) **Dehnspanneinrichtung**
Expansion chucking device
Dispositif de serrage expansible

(43) Veröffentlichungstag der Anmeldung: 12.10.2005
(73) Patentinhaber: Schunk GmbH & Co. KG Spann- und Greiftechnik, 74348 Lauffen (DE)
(72) Erfinder: Schuster, Andreas, 71543 Wüstenrot/Neulautern (DE); Michler, Gerhard, 74360 Ilsfeld (DE); Retzbach, Thomas, 74357 Bönnigheim (DE); Sigmund, Rainer, 74348 Lauffen (DE)
(74) Vertreter: Paul, Dieter-Alfred

(56) Entgegenhaltungen:
- WO-A-03/095132
- DE-C- 19 525 574
- GB-A- 833 048

## Beschreibung

Die vorliegende Erfindung betrifft eine Dehnspanneinrichtung nach dem Oberbegriff von Anspruch 1 und Anspruch 2.

Dehnspanneinrichtungen dieser Art sind beispielsweise aus der DE 195 25 574 C1 bekannt und werden in der Praxis eingesetzt, um ein Werkzeug wie beispielsweise ein Fräs-oder Bohrwerkzeug an der Arbeitsspindel einer entsprechenden Werkzeugmaschine zu fixieren. Hierzu wird der Schaft des zu spannenden Werkzeugs in die Aufnahme des Dehnspannfutters eingesetzt und anschließend der Spannring unter Verkleinerung des Volumens der Druckkammer auf die Dehnbüchse aufgeschraubt, so daß dieser durch den wachsenden Druck in der Druckkammer nach innen verformt wird und den Werkzeugschaft in der Aufnahme fixiert.

Die Dehnbüchsen der bekannten Spanneinrichtungen sind in der Regel dünnwandig ausgebildet, um die erforderlichen Verformungskräfte gering zu halten. Die dünnwandige Ausführung bringt jedoch gleichzeitig den Nachteil mit sich, daß die Steifigkeit der Dehnbüchsen nicht besonders hoch ist.

Eine Dehnspanneinrichtung der eingangs genannten Art ist aus der GB-A 833,048 bekannt. Bei dieser Spanneinrichtung ist die Dehnbüchse geschlitzt ausgebildet. Hierdurch wird erreicht, daß die Dehnbüchse in radialer Richtung "weicher" wird, so daß bei gleichbleibender Wandstärke die für eine Verformung aufzubringenden radialen Druckkräfte herabgesetzt werden bzw. in umgekehrter Weise bei gleichbleibenden Verformungskräften die Wandstärke der Dehnbüchse erhöht werden kann, ohne daß darunter die Verformbarkeit leidet.

Aufgabe der Erfindung ist es, eine Dehnspanneinrichtung der eingangs genannten Art so auszugestalten, daß sie eine weiter erhöhte Statlichkeit besitzt.

Diese Aufgabe ist erfindungsgemäß durch die kennzeichnenden Merkmale der Ansprüche 1 und 2 gelöst. Hierbei können die axialen Schlitze beispielsweise in einem Rodierverfahren hergestellt werden.

In weiterer Ausbildung der Erfindung ist vorgesehen, daß die erforderliche Abdichtung der Dehnbüchse gegenüber dem Druckraum über eine Zwischenhülse erfolgt, welche insbesondere an dem Grundkörper und/oder der Dehnbüchse fixiert sein kann.

Im Falle der Verwendung einer solchen zwischenhülse sollte gewährleistet sein, daß die zwischenhülse insbesondere am vorderen Ende der Dehnspanneinrichtung nicht in Kontakt mit dem Spannring kommt. Versuche haben gezeigt, daß ansonsten die Rundlaufgenauigkeiten beeinträchtigt werden können.

Gemäß einer weiteren Ausführungsform ist vorgesehen, daß die Druckkammer an ihrem zum Grundkörper weisenden Ende gegen einen Austritt von Hydraulikmittel der oder vom Fastkorper durch einen Dichtungsring aus Kunststoff abgedichtet ist, der ausreichend flexibel ist, um eine Abdichtung auch im Falle der hohen Dehnraten, die mit der erfindungsgemäßen Dehnspann Einrichtung erzielt werden können, zuverlässig abzudichten.

Eine solche Abdichtung ist auch zweckmäßig, wenn die Druckkammer mit einem elastischen Feststoffkörper gefüllt ist, ein Gleitringelement zwischen dem elastischen Feststoffkörper und einer Druckfläche des Spannrings angeordnet ist, um eine axiale Druckkraft vom Spannring auf den Feststoffkörper zu übertragen. Dieser Ausgestaltung liegt die Überlegung zugrunde, die Druckkammer nicht wie im Stand der Technik mit einem flüssigen Hydraulikmittel, sondern mit einem elastischen und ebenfalls ringförmigen Feststoffkörper zu füllen, so daß auf aufwendige Dichtungsmaßnahmen verzichtet werden kann. Der in die Druckkammer eingesetzte Gleitring sorgt dabei dafür, daß der ringförmige Feststoffkörper im Bereich seiner der Druckfläche des Spannrings zugewandten Stirnfläche von den Drehbewegungen des Spannrings zumindest weitgehend entkoppelt wird und somit über diese Stirnfläche lediglich Druckkräfte, jedoch keine Reib- oder Torisionskräfte in den Feststoffkörper eingeleitet werden. Es hat sich gezeigt, daß auf diese Weise ein Extrudieren des elastischen Feststoffkörpermaterials vermieden und auch der Verschleiß sehr gering gehalten werden kann. Im übrigen kann der Gleitring, der beispielsweise aus einer geeigneten Metallegierung, einem Kunststoff oder einem Keramikmaterial bestehen kann, auch gleichzeitig eine Dichtungsfunktion besitzen.

In weiterer Ausbildung dieser Ausführungsform der Erfindung ist vorgesehen, daß der Feststoffkörper aus mehreren, nebeneinander liegenden in den Druckraum angeordneten Ringelement besteht. Dabei sollte die Druckkammer einen zumindest im wesentlichen konstanten Innen- und Außendurchmesser besitzen.

Außerdem kann ein Anschlag vorgesehen sein, der den axialen Verstellweg des Spannrings in der Weise begrenzt, daß der maximal erzielbare Druck innerhalb der Druckkammer definiert begrenzt ist.

Des weiteren können an dem Spannring Eingriffsmittel für Betätigungselemente wie beispielsweise einen Rollen- oder Hakenschlüssel vorgesehen sein.

Schließlich kann die erfindungsgemäße Dehnspanneinrichtung für eine Welle/Nabe-Verbindung eingesetzt werden. Ebenfalls kann sie stationär an einer Werkbank oder dergleichen vorgesehen sein.

Im übrigen kann die erfindungsgemäße Dehnspanneinrichtung auch als Spanndorn ausgebildet sein. In diesem Fall besitzt sie einen Grundkörper, eine an einem axialen Endbereich des Grundkörpers vorgesehene Dehnbüchse und einen Spannring, welcher in die Dehnbüchse unter Bildung einer dazwischenliegenden ringförmigen Druckkammer eingreift und mit dem Grundkörper verschraubt ist. Bei dieser Ausgestaltung als Spanndorn wird die Dehnbüchse bei einem Druckaufbau in der Druckkammer nach außen verformt, um ein auf die Dehnbüchse aufgeschobenes Bauteil zu fixieren.

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt:
- Figur 1: im Längsschnitt eine Ausführungsform einer als Dehnspannfutter ausgebildeten Dehnspanneinrichtung gemäß der vorliegenden Erfindung in ihrem unbetätigten Zustand,

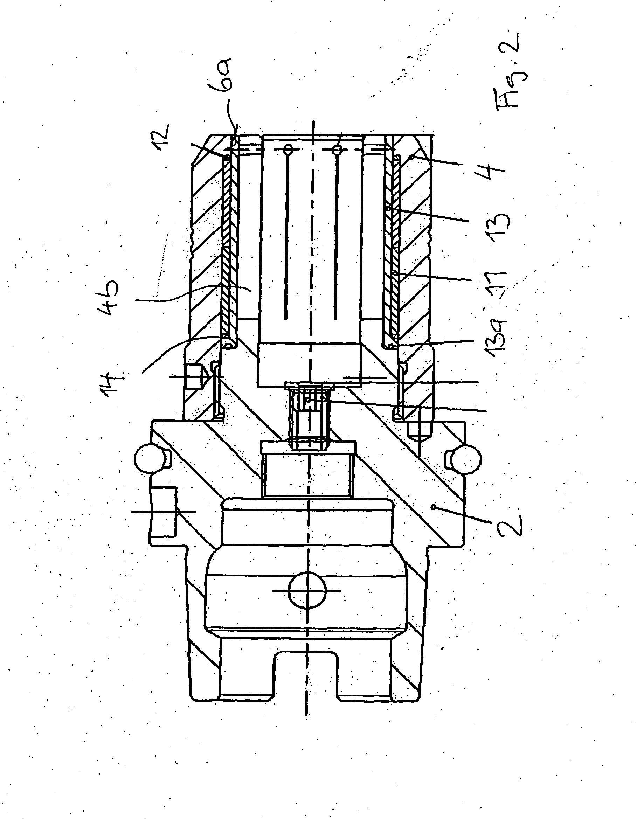

- Figur 2: das Dehnspannfutter aus Figur 1 in betätigtem Zustand, und
- Figur 3: das Dehnspannfutter in Explosionsansicht.

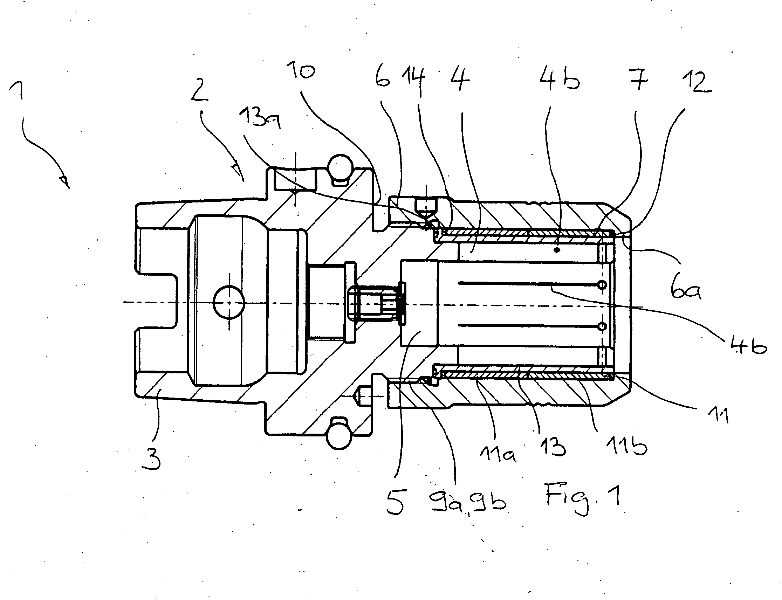

In der Figur 1 ist eine Ausführungsform eines als Steilkegelwerkzeughalter ausgebildeten Dehnspannfutters 1 gemäß der vorliegenden Erfindung im Längsschnitt dargestellt. Das Dehnspannfutter 1 umfaßt einen Grundkörper 2 aus einem formsteifen Material, der an seinem in der Zeichnung linksseitigen Endbereich in an sich bekannter weise einen Befestigungskonus 3 zur Einspannung an einer drehangetriebenen Arbeitsspindel einer Werkzeugmaschine aufweist. An dem anderen axialen Ende des Grundkörpers 2 ist eine dünnwandige Dehnbüchse 4 vorgesehen, die hier einteilig mit dem Grundkörper 2 ausgebildet ist, alternativ aber auch ein separates Bauteil sein kann, das mit dem Grundkörper 2 fest verbunden ist. Die,Dehnbüchse 4 bildet eine zentrale Aufnahme 5, in die ein zylindrischer Schaft eines Werkzeugs wie beispielsweise eines zu spannenden Bohrers oder Fräsers eingeschoben werden kann.

Die Dehnbüchse 4 ist von einem als Überwurfmutter ausgebildeten Spannring 6 umgeben, der an seinem zum Befestigungskonus 3 weisenden axialen Ende auf den Grundkörper 2 aufgeschraubt ist, wozu an dem Grundkörper 2 und an der Innenseite des Spannrings 6 entsprechende Gewindeabschnitte 9a, 9b ausgebildet sind. Die Dehnbüchse 4 und der Spannring 6 bilden zwischen sich eine ringförmige Druckkammer 7 mit einem konstanten Innen- und Außendurchmesser, die an ihrem und zum Befestigungskonus 3 weisenden axialen Ende durch einen Absatz 4b der Dehnbüchse 4 und an ihrem anderen axialen Ende durch eine Schulter 6a des Spannrings 6 begrenzt wird. Die Druckkammer 7 ist mit einem elastischen Feststoffkörper 11 gefüllt, welcher in der dargestellten Ausführungsform durch zwei nebeneinander liegende Ringelemente 11a, 11b gebildet wird. Zusätzlich ist an dem rechten Ende der Druckkammer 7 zwischen der Schulter 6a des Spannrings 6 und der dieser Schulter 6a zugewandten Stirnfläche des außenliegenden Ringelements 11b ein Gleitring 12 vorgesehen, der zum einen den Spannring 6 im Bereich der Schulter 6a dem Feststoffkörper 11 entkoppelt und zum anderen als Dichtungselement fungiert.

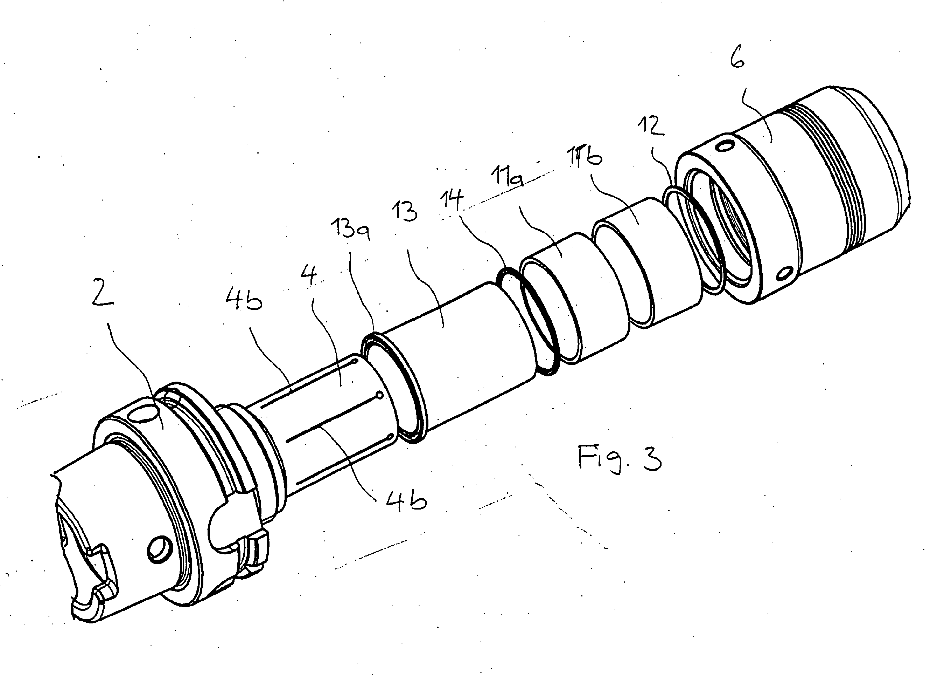

Der Druck innerhalb der Druckkammer 7 läßt sich verändern, indem der Spannring 6 gegenüber dem Grundkörper 2 verdreht und auf diese weise axial verstellt wird, so daß sich das Volumen der Druckkammer 7 verändert. Konkret ist die Anordnung so getroffen, daß in der in Figur 1 gezeigten rechten Endstellung des Spannrings 6 das Volumen der Druckkammer 7 so groß ist, daß die elastischen Ringelemente 11 in der Druckkammer 7 entspannt sind. Wenn der Spannring 6 aus der in Figur 1 dargestellten Endstellung auf den Grundkörper 2 aufgeschraubt wird, bis er die in Figur 3 dargestellte linke Endstellung 1 erreicht, in welcher der Spannring 6 an einem Axialanschlag 10 des Grundkörpers 2 anliegt, wird die axiale Länge der Druckkammer 7 und damit deren Volumen kontinuierlich verkleinert. Dabei werden die elastischen Ringelemente 11a bis 11d elastisch zusammengedrückt, so daß sich der Druck innerhalb der Druckkammer 7 erhöht und die dünnwandige Dehnbüchse 4 nach innen verformt wird, um ein in die Aufnahme 5 eingesetztes Bauteil zu spannen. Bei der Verstellung des Spannrings 6 aus der in Figur 1 gezeigten Endstellung in die in Figur 3 dargestellte Endstellung werden im wesentlichen reine axiale Druckkräfte in die Ringelemente 11 eingeleitet, da die Ringelemente 11 an ihrem Außenumfang durch das vorgesehene Schmiermittel und an ihrer zur Schulter 6a weisenden Stirnfläche durch den Gleitring 12 von dem Spannring 6 entkoppelt sind, so daß dieser sich gegenüber dem Feststoffkörper 11 im wesentlichen frei bewegen kann.

Wie in der Zeichnung gut erkennbar ist, ist die Dehnbüchse 4 des erfindungsgemäßen Dehnspannfutters 1 vergleichsweise dickwandig ausgebildet, wobei sie sechs axiale Schlitze 4b aufweist, welche in Umfangsrichtung gleichmäßig beabstandet voneinander angeordnet sind und die Dehnbüchsen 4 radial durchgreifen. Dabei sind die Schlitze 4b endseitig geschlossen ausgebildet, d.h. sie enden mit Abstand von den axialen Enden der Dehnbüchse 4.

In dem dargestellten Ausführungsbeispiel sind die Schlitze 4b in Umfangsrichtung gleichmäßig voneinander beabstandet und gleich lang ausgebildet. Eine ungleichmäßige Anordnung und unterschiedlich lange Ausbildung der Schlitze 4b ist aber ebenfalls möglich. Im übrigen sind die Schlitze 4b in die Dehnbüchse 4 hinein erodiert; die Startbohrungen 4c an den vorderseitigen Enden der Schlitze 4b sind in der Zeichnung gut erkennbar.

Um zu verhindern, daß während des Spannvorgangs extrudierendes Kunststoffmaterial des Feststoffkörpers 11 in die Schlitze 4b eintritt, ist die Dehnbüchse 4 gegenüber der Druckkammer 7 durch eine Zwischenhülse 13 abgedichtet, welche auf die Dehnbüchse 4 aufgeschoben und an dem grundkörperseitigen Ende fixiert ist. Die zwischenhülse, welche beispielsweise aus Kunststoff, Stahl oder Messing bestehen kann, weist an ihrem grundkörperseitigen Ende einen radial nach außen vorstehenden Flansch 13a auf, welcher die Druckkammer 7 an ihrem grundkörperseiten Ende begrenzt. Dabei ist zwischen dem Flansch 13a und dem Feststoffkörper 11 in der Druckkammer 7 ein Dichtungsring 14 aus Kunststoff vorgesehen, der geeignet ist, den insbesondere bei hohen Dehnraten entstehenden Extrusionsspalt zwischen dem Spannring 6 und der Zwischenhülse 13 abzudichten.

In der Zeichnung nicht erkennbar ist, daß die Zwischenhülse 13 mit dem Spannring 6 nicht in Kontakt kömmt, d.h. ein Ringspalt zwischen den beiden Bauteilen vorgesehen ist, um eine Beeinträchtigung der Rundlaufgenauigkeiten zu verhindern.

## Patentansprüche

1. Dehnspanneinrichtung mit einem Grundkörper (2), einer an einem axialen Endbereich des Grundkörpers (2) vorgesehenen Dehnbüchse (4), die eine zentrale Aufnahme (5) für ein zu spannendes Bauteil bildet, und einem Spannring (6), welcher die Dehnbüchse (4) unter Bildung einer dazwischen liegenden ringförmigen Druckkammer (7) umgibt und mit dem Grundkörper (2) verschraubt ist, wobei die Druckkammer (7) mit einem Hydraulikmittel oder mit einem elastischen Feststoffkörper (11) gefüllt ist und die Dehnbüchse (4) elastisch verformt werden kann, um ein Bauteil in der Aufnahme (5) zu fixieren, indem der Spannring (6) unter Verkleinerung des Volumens der Druckkammer (7) durch Verdrehung gegenüber dem Grundkörper (2) axial verstellt wird, und wobei in der Dehnbüchse (4) mehrere Schlitze (4b) ausgebildet sind, die sich in der Axialrichtung erstrecken und in Umfangsrichtung betrachtet voneinander beabstandet sind, wobei die Dehnbüchse (4) gegenüber der Druckkammer (7) abgedichtet ist, um ein Eintreten von Hydraulikmittel (11) oder von Feststoffkörper (11) in die Schlitze (4a) zu verhindern, **dadurch gekennzeichnet, daß** die axialen Schlitze (4b) an ihren beiden axialen Enden geschlossen sind.

2. Dehnspanneinrichtung mit einem Grundkörper (2), einer an einem axialen Endbereich des Grundkörpers (2) vorgesehenen Dehnbüchse (4) und einem Spannring (6), welcher in die Dehnbüchse (4) unter Bildung einer dazwischen liegenden ringförmigen Druckkammer (7) eingreift und mit dem Grundkörper (2) verschraubt ist, wobei die Druckkammer (7) mit einem Hydraulikmittel oder mit einem elastischen Feststoffkörper (11) gefüllt ist und die Dehnbüchse (4) elastisch verformt werden kann, um ein Bauteil auf der Dehnbüchse (4) zu fixieren, indem der Spannring (6) unter Verkleinerung des Volumens der Druckkammer (7) durch Verdrehung gegenüber dem Grundkörper (2) axial verstellt wird, und wobei in der Dehnbüchse mehrere Schlitze (4b) ausgebildet sind, die sich in der Axialrichtung erstrecken und in Umfangsrichtung betrachtet voneinander beabstandet sind, wobei die Dehnbüchse (4) gegenüber der Druckkammer (7) abgedichtet ist, um ein Eintreten von Hydraulikmittel oder von Feststoffkörper (11) in die Schlitze (4a) zu verhindern, **dadurch gekennzeichnet, daß** die axialen Schlitze (4b) an ihren beiden axialen Enden geschlossen sind.

3. Dehnspanneinrichtung nach Anspruch 1 oder 2, **dadurch gekennzeichnet, daß** zur Abdichtung der Dehnbüchse (4) gegenüber dem Druckraum (7) eine Zwischenhülse (13) vorgesehen ist.

4. Dehnspanneinrichtung nach Anspruch 3, **dadurch gekennzeichnet, daß** die Zwischenhülse (13) an dem Grundkörper (2) und/oder der Dehnbüchse (4) fixiert ist.

5. Dehnspanneinrichtung nach einem der vorherigen Ansprüche, **dadurch gekennzeichnet, daß** die Druckkammer (7) an ihrem zum Grundkörper (2) weisenden Ende gegen einen Austritt von Hydraulikmittel oder Feststoffkörper durch einen Dichtungsring (14) aus Kunststoff abgedichtet ist.

6. Dehnspanneinrichtung nach einem der vorherigen Ansprüche, **dadurch gekennzeichnet, daß** die Druckkammer (7) mit einem elastischen Feststoffkörper (11) gefüllt und ein Gleitringelement (12) zwischen dem elastischen Feststoffkörper (11) und einer Druckfläche (6a) des Spannrings (6) angeordnet ist, um eine axiale Druckkraft vom Spannring (6) auf den Feststoffkörper (11) zu übertragen.

7. Dehnspanneinrichtung nach Anspruch 6, **dadurch gekennzeichnet, daß** das Gleitringelement (12) Dichtungsfunktion besitzt.

8. Dehnspanneinrichtung nach einem der vorherigen Ansprüche, **dadurch gekennzeichnet, daß** der Feststoffkörper (11) mehrere nebeneinander liegend angeordnete Ringelemente (11a, 11b, 11c, 11d) aufweist.

9. Dehnspanneinrichtung nach einem der vorherigen Ansprüche, **dadurch gekennzeichnet, daß** die Schlitze (4b) in Umfangsrichtung der Dehnbüchse (4) betrachtet gleichmäßig voneinander beabstandet sind.

## Claims

1. An expansion chucking device having a base body (2), an expansion sleeve (4) provided at an axial end region of the base body (2) and forming central receptacle (5) for a component to be chucked, and a chucking ring (6) that surrounds the expansion sleeve (4), forming an annular pressure chamber (7) located therebetween, and is thread-joined to the base body (2), the pressure chamber (7) being filled with a hydraulic medium (11) or an elastic solid body (11) and the expansion sleeve (4) being capable of being elastically deformed in order to secure a component in the receptacle (5) by the fact that the chucking ring (6) is axially displaced by rotation with respect to the base body (2), with a reduction in the volume of the pressure chamber (7), wherein multiple slits (4b) are embodied in the expansion sleeve (4) which extend in the axial direction and are spaced apart from one another when viewed in the circumferential direction, the expansion sleeve (4) being sealed off with respect to the pressure chamber (7) in order to prevent any entry of hydraulic medium (11) or solid body (11) into the slits (4a), **characterized in that** the axial slits (4b) are closed at their two axial ends.

2. An expansion chucking device having a base body (2), an expansion sleeve (4) provided at one axial end region of the base body (2), and a chucking ring (6) that engages into the expansion sleeve (4), forming an annular pressure chamber (7) located therebetween, and is thread-joined to the base body (2), the pressure chamber (7) being filled with a hydraulic medium (11) or an elastic solid body (11) and the expansion sleeve (4) being capable of being elastically deformed in order to secure a component on the expansion sleeve (4) by the fact that the chucking ring (6) is axially displaced by rotation with respect to the base body (2), with a reduction in the volume of the pressure chamber (7), wherein multiple slits (4b) are embodied in the expansion sleeve (4) which extend in the axial direction and are spaced apart from one another when viewed in the circumferential direction, the expansion sleeve (4) being sealed off with respect to the pressure chamber (7) in order to prevent any entry of hydraulic medium (11) or solid body (11) into the slits (4a), **characterized in that** the axial slits (4b) are closed at their two axial ends.

3. The expansion chucking device according to Claim 1 or 2, wherein an intermediate sleeve (13) is provided for sealing of the expansion sleeve (4) with respect to the pressure space (7).

4. The expansion chucking device according to Claim 3, wherein the intermediate sleeve (13) is secured to the base body (2) and/or to the expansion sleeve (4).

5. The expansion chucking device according to one of the preceding claims, wherein the pressure chamber (7) is sealed at its end facing toward the base body (2), by way of a sealing ring (14) made of plastic, against any emergence of hydraulic medium or solid body.

6. The expansion chucking device according to one of the preceding claims, wherein the pressure chamber (7) is filled with an elastic solid body (11) and a sliding ring element (12) is arranged between the elastic solid body (11) and a pressure surface (6a) of the chucking ring (6) in order to transfer an axial compressive force from the chucking ring (6) to the solid body (11).

7. The expansion chucking device according to Claim 6, wherein the sliding ring element (12) possesses a sealing function.

8. The expansion chucking device according to Claim 6 or 7, wherein the solid body (11) comprises multiple annular elements (11a, 11b, 11c, 11d) arranged to lie next to one another.

9. The expansion chucking device according to one of the preceding claims, wherein the slits (4b) are regularly spaced apart from one another when viewed in the circumferential direction of the expansion sleeve (4).

## Revendications

1. Mécanisme de serrage extensible avec un corps principal (2), une douille expansible (4) prévue à une zone axiale terminale du corps principal (2), qui constitue une centrale de perception (5) pour l'élément à serrer, et une bague de serrage (6) qui entoure la douille expansible (4) sous formation d'une chambre hyperbare (7) intermédiaire annulaire et qui est visée au corps principal (2), la chambre hyperbare (7) étant remplie d'un agent hydraulique ou bien d'un solide élastique (11) et la douille expansible (4) peut être déformée élastiquement à fin de pouvoir fixer un élément de construction dans la perception (5), et ceci par déplacement axial de la bague de serrage (6) sous torsion par rapport au corps principal (2) causé par diminution du volume dans la chambre hyperbare (7), au niveau de la douille expansible (4) sont constituées plusieurs échancrures (4b) qui s'étalent dans le sens axiale et qui, vues de le sens périphérique, sont écartées l'une de l'autre, la douille expansible (4) étant colmatée par rapport à la chambre hyperbare (7), à fin d'éviter toute entrée d'agent hydraulique(11) ou de solides (11) dans l'échancrure (4a), ce mécanisme est **caractérisé en ce que**, les échancrures axiales (4b) sont fermées au niveau des deux extrémités axiales.

2. Mécanisme de serrage extensible avec un corps principal (2), une douille expansible (4) prévue à une zone axiale terminale du corps principal (2), et une bague de serrage (6) se trouvant dans la douille expansible (4) sous formation d'une chambre hyperbare (7) intermédiaire annulaire et qui est visée au corps principal (2), la chambre hyperbare (7) étant remplie d'un agent hydraulique ou bien d'un solide élastique (11) et la douille expansible (4) peut être déformée élastiquement à fin de pouvoir fixer un élément de construction au niveau de la douille expansible (4), et ceci par déplacement axial de la bague de serrage (6) sous torsion par rapport au corps principal (2) causé par diminution du volume dans la chambre hyperbare (7), au niveau de la douille expansible (4) sont constituées plusieurs échancrures (4b) qui s'étalent dans le sens axiale et qui, vues de le sens périphérique, sont écartées l'une de l'autre, la douille expansible (4) étant colmatée par rapport à la chambre hyperbare (7), à fin d'éviter toute entrée d'agent hydraulique(11) ou de solides (11) dans l'échancrure (4a), ce mécanisme est **caractérisé en ce que**, les échancrures axiales (4b) sont fermées au niveau des deux extrémités axiales.

3. Mécanisme de serrage extensible selon revendication 1 ou 2, **caractérisé en ce que**, pour le colmatage de la douille expansible (4) par rapport à la chambre hyperbare (7), une douille intermédiaire (13) est utilisée.

4. Mécanisme de serrage extensible selon revendication 3, **caractérisé en ce que**, la douille intermédiaire (13) est fixée au corps principal (2) et/ou à la douille expansible.

5. Mécanisme de serrage extensible selon l'une des revendications signalées en haut, **caractérisé en ce que**, la chambre hyperbare (7) est colmatée à son extrémité adjacente au corps principal (2) à laide d'une bague d'étanchéité contre la sortie d'agent hydraulique ou solide.

6. Mécanisme de serrage extensible selon l'une des revendications signalées en haut, **caractérisé en ce que**, la chambre hyperbare (7) est remplie d'un solide élastique (11) et une bague coulissante (12) est déposée entre le solide élastique (11) et une surface de pression (6a) de la bague de serrage, afin de transmettre une force de pression axiale, de la bague de serrage (6) au solide.

7. Mécanisme de serrage extensible selon revendication 6, **caractérisé en ce que**, la bague coulissante (12) possède une fonction de colmatage.

8. Mécanisme de serrage extensible selon l'une des revendications signalées en haut, **caractérisé en ce que**, le solide (11) présente plusieurs bagues (11a, 11b, 11c, 11d) déposées l'une à cote de l'autre.

9. Mécanisme de serrage extensible selon l'une des revendications signalées en haut, **caractérisé en ce que**, les échancrures (4b) vue dans le sens périphérique de la douille expansible (4) sont écartées de façon régulière l'une de l'autre.
